# EUROPEAN PATENT APPLICATION

(11) **EP 3 093 733 A1**
(43) Date of publication of application: **16.11.2016**
(21) Application number: 15167674.9
(22) Date of filing: 13.05.2015
(51) Int. Cl.: G06F 3/01, G06N 3/00, G06T 13/40

(54) **SITUATIONAL SIMULATION SYSTEM**

(71) Applicant: King's Metal Fiber Technologies Co., Ltd., 42060 Taichung City (TW)
(72) Inventor: Huang, Hong Hsu, 10451 Taipei City (TW); Chen, Reng Sho, 10451 Taipei City (TW)
(74) Representative: Cabinet Chaillot

(57) **Abstract**

A situational simulation system is provided, using an intelligent system connected to an input unit and an interactive display interface. The input unit receives dynamic images and audio and transforms the dynamic images and audio into action signals and speech signals and transmits the action signals and the speech signals to the intelligent system so that the intelligent system performs computation and analysis based on the input dynamic action signals and speech signals to simulate the dynamic images and audio. Then, the interactive display interface displays the simulated dynamic images and audio from the intelligent system and interacts with the users. As such, the situational intelligent system is used to generate simulated images and audio so that the users can interact through the interactive display interface to achieve a realistic effect of situational simulation for practical application.

## Description

### TECHNICAL FIELD

The present invention generally relates to a situational simulation system, and in particular, to a design using an input unit, intelligent system and interactive display interface so that the interactive display interface is able to display the dynamic shape and voice simulated by the intelligent system as well as interact with users, applicable to a situational simulation system or similar structures.

### BACKGROUND

Many families suffer the loss of family member and loved ones, in particular, in most unexpected ways or accidents. The sudden departure of a family member often makes the survived with little to remember with, and often in the form of pictures or video recordings.

However, the available technology often relies on computer animation to render the pictures of the decreased or uses pre-recorded audio files embedded in dolls. The main shortcoming is the incapability to interact or converse with the deceased as if they were still alive.

Although the contemporary technology equipped the computers (such as, super computers) with the capability to think and to perform various algorithms, the computers are often lacking of the capability to learn and improvise to respond as a human brain. Therefore, the current computers are unable to perform realistic human simulation.

Therefore, in view of the above problems and shortcomings, it is desirable to provide a situational simulation system with realistic human interaction capability easy for the user to assemble and operate.

### SUMMARY

The primary object of the present invention is to provide a situational simulation system, using an intelligent system connected to an input unit and an interactive display interface, wherein the input unit is provided for receiving dynamic images and audio, transforming the dynamic images and audio into action signals and speech signals and transmitting the action signals and the speech signals to the intelligent system so that the intelligent system performing computation and analysis based on the input dynamic action signals and speech signals to simulate the dynamic images and audio, then the interactive display interface displaying the simulated dynamic images and audio from the intelligent system and interacting with users. As such, the situational intelligent system is used to generate simulated images and audio so that the users can interact through the interactive display interface to achieve a realistic effect of situational simulation for practical application.

Another object of the present invention is to provide a situational simulation system, using an input unit having an image capturing unit, a language capturing unit and a signal transformation unit, and the image capturing unit being connected to the signal transformation unit, and the image capturing unit being able to capture dynamic images from background and the signal transformation unit transforming the captured dynamic images into action signals; the language capturing unit being connected to the signal transformation unit, and the language capturing unit being able to capture dynamic audio from images and the signal transformation unit transforming the captured dynamic audio into speech signals; and, as such, the input unit having the capability to transform the dynamic images and audio into action signals and speech signals to enhance the overall transformation effect.

Yet another object of the present invention is to provide a situational simulation system, using an interactive display interface of a three-dimensional projection device or holography device, or any of a display, flexible display, audiovisual player, gate surveillance control system, vehicular audiovisual system, smart phone handheld device that is equipped with a display screen so as to display the simulated dynamic images and audio from the intelligent system to enhance the overall display effect.

The situational simulation system of the present invention includes: an input unit, an intelligent system and an interactive display interface, wherein the input unit is for receiving dynamic images and audio, transforming the dynamic images and audio into action signals and speech signals; the intelligent system is connected to the input unit and is able to perform machine learning to learn the dynamic action signals and the speech signals, the intelligent system being able to perform computation and analysis based on the dynamic action signals and speech signals to simulate the dynamic images and audio; and the interactive display interface is connected to the intelligent system and is able to display the simulated dynamic images and audio from the intelligent system and interacting with users, the interactive display interface having a sensor unit for sensing the user facial expression, movement and dialogue speech, transforming the facial expression, movement and dialogue speech into facial expression and motion signals and dialogue speech signals to the intelligent system, so that the intelligent system is able to adjust the simulated dynamic images and audio based on the user facial expression and motion signals and dialogue speech signals.

### BRIEF DESCRIPTION OF THE DRAWINGS

The embodiments can be understood in more detail by reading the subsequent detailed description in conjunction with the examples and references made to the accompanying drawings, wherein:
FIG. 1 shows a schematic view of a preferred application scenario in accordance with an exemplary embodiment;
FIG. 2 shows a schematic view of a structure of the preferred embodiment of the present invention;
FIG. 3 shows a schematic view of a state illustrating connection through a network in accordance with an exemplary embodiment;
FIG. 4 shows a schematic view of a structure of another preferred embodiment of the present invention;
FIG. 5 shows a schematic view of another preferred application scenario in accordance with an exemplary embodiment; and
FIG. 6 shows schematic view of a state of connection through a network in accordance with another exemplary embodiment.

### DETAILED DESCRIPTION OF THE DISCLOSED EMBODIMENTS

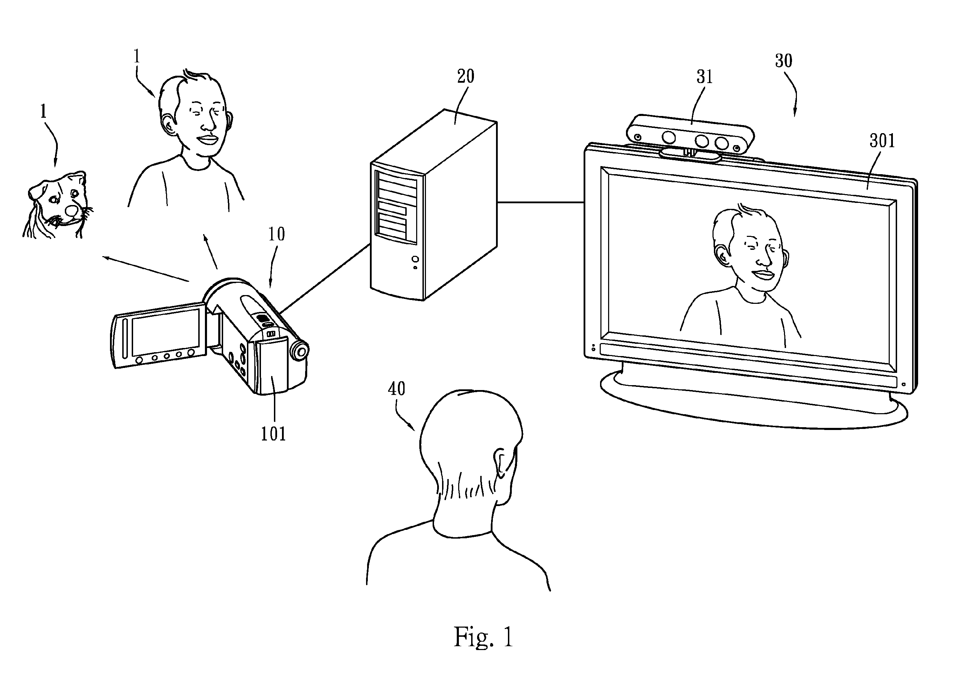

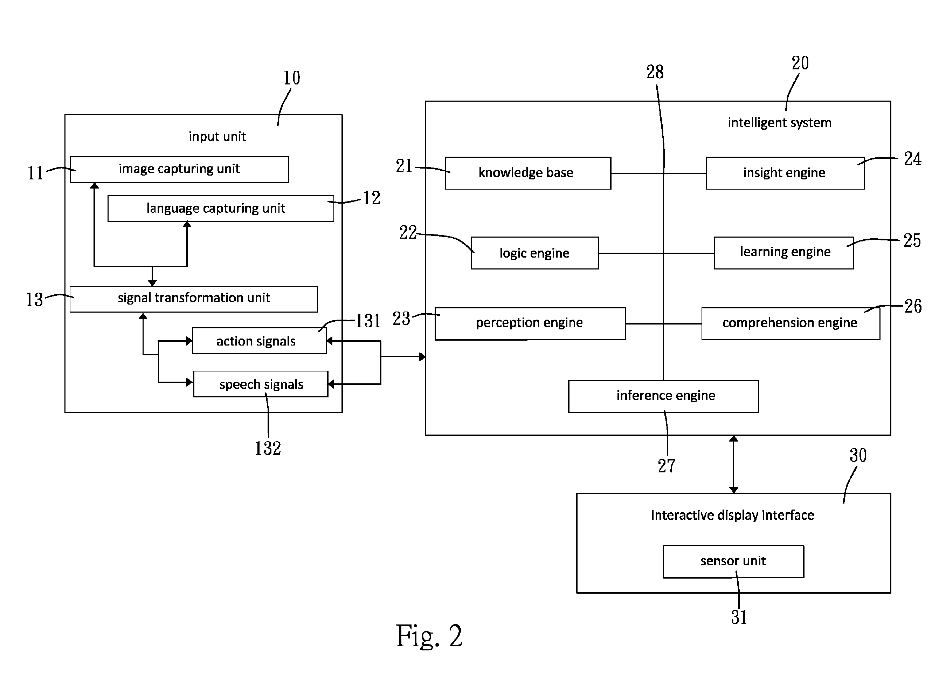

Referring to FIGS. 1-6, an exemplary embodiment of the present invention is illustrated. A preferred embodiment of a situational simulation system according to the present invention is applied to a household, room or a public place. The situational simulation system includes an input unit 10, an intelligent system 20, and an interactive display interface 30. The intelligent system 20 is connected to both the input unit 10 and the interactive display interface 30 (as shown in FIG. 1), wherein the input unit 10 is one of a surveillance device, a camera device 101, and a device with a camera. The input unit 10 is able to receive a dynamic object image 1 and audio, and the input unit 10 includes an image capturing unit 11, a language capturing unit 12, and a signal transformation unit 13 (as shown in FIG. 2). The image capturing unit 11 is connected to the signal transformation unit 13. The image capturing unit 11 is able to extract dynamic object image 1 from the background and the extracted dynamic object image 1 is transformed by the signal transformation unit 13 into action signals 131. Also, the language capturing unit 12 is connected to the signal transformation unit 13. The language capturing unit 12 is able to extract dynamic audio (not shown) from the images and the extracted dynamic audio is transformed by the signal transformation unit 13 into speech signals 132. As such, the input unit 10 is able to receive dynamic object image 1 and audio and transforms the dynamic object image 1 and audio into action signals 131 and speech signals 132.

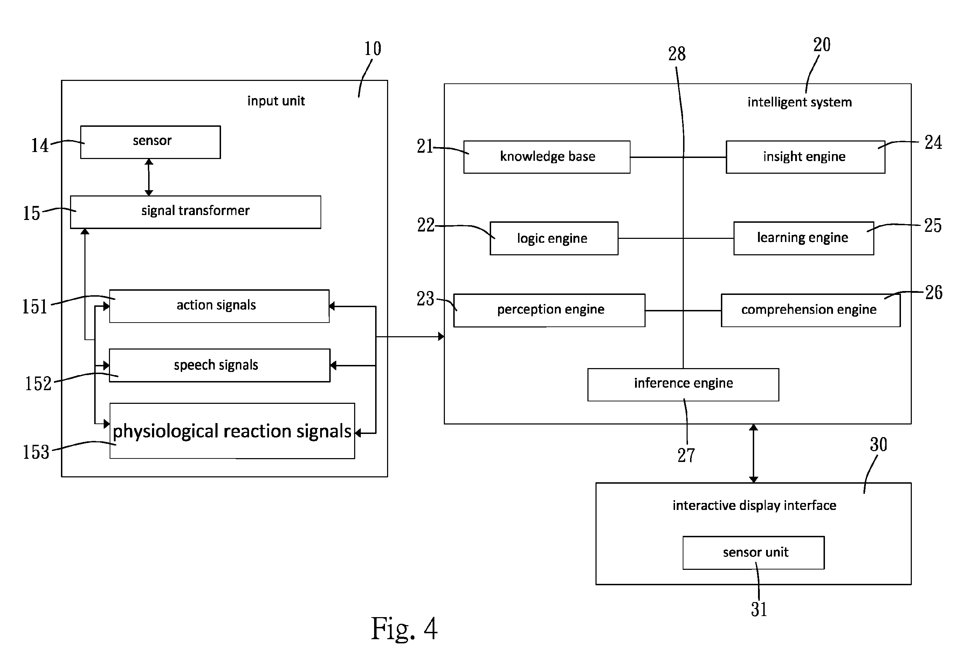

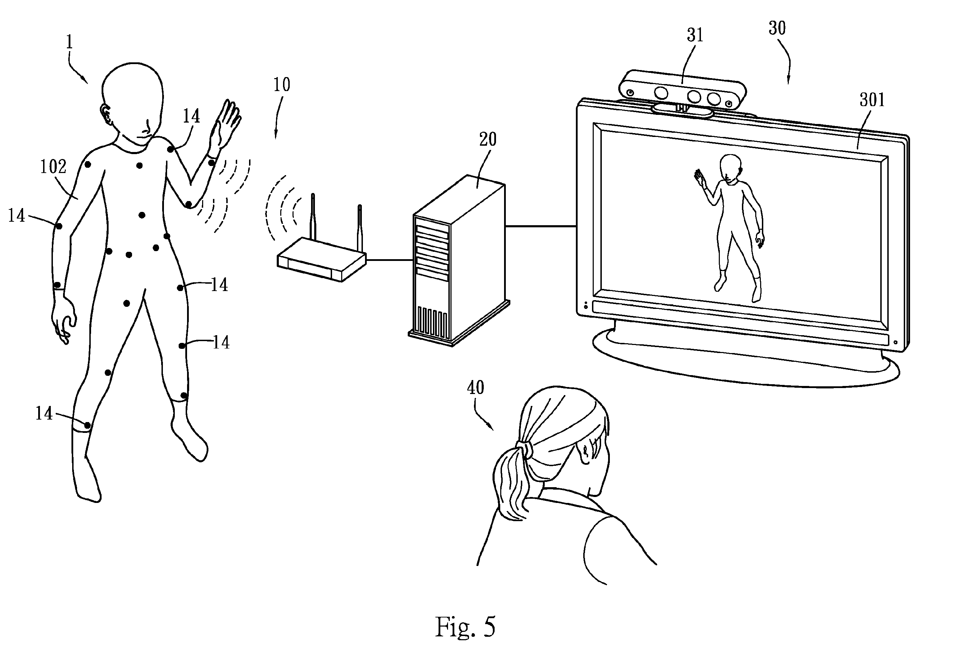

Another embodiment of the present invention is that the input unit 10 is motion sensing clothing 102 (as shown in FIG. 5). The motion sensing clothing 102 is disposed with a plurality of sensors 14 and signal transformer 15. The sensors 14 are connected to the signal transformer 15 (as shown in FIG. 4), and the signal transformer 15 transforms the signal detected by the sensors 14, wherein the sensors 14 are one of a body motion sensor, a voice sensor, a brainwave sensor, a pager sensor, a heartbeat sensor, a blood pressure sensor, and other physiological signal sensors. The body motion sensor disposed on the motion sensing clothing 102 is to sense the motion of the dynamic object image 1, and the signal transformer 15 is to transform the motion into action signals 151. The voice sensor is to receive the dynamic audio (not shown) and the signal transformer 15 is to transform the audio into speech signals 152. Then, the brainwave sensor, pager sensor, heartbeat sensor, blood pressure sensor or other physiological signal sensors (not shown) are to detect the dynamic physiological reactions and the signal transformer 15 is to transform the dynamic physiological reactions into physiological reaction signals 153. As such, the motion sensing clothing 102, in addition to sensing dynamic object image 1 and audio, can also detect physiological reaction so that the intelligent system 20 can simulate the physiological state based on the dynamic physiological reactions, such as illness state and flu state to emulate the realistic state.

In the above preferred embodiments, the dynamic state refers to any person with life sign, ranging from new born baby to elderly, regardless of the age and gender, and the input unit 10 is to receive the object image 1 and audio of any person and to transform the dynamic object image 1 and audio into action signals 131 and speech signals 132. The dynamic state may also refer to animals with life sign, such as a dog and a cat. The input unit 10 is to receive the object image 1 and audio of any animal, and to transform the dynamic object image 1 and audio into action signals 131 and speech signals 132. Also, the dynamic state may refer to any aquatic animal with life sign, such as a whale, a dolphin, and a hippo, and so on. The input unit 10 is to receive the object image 1 and audio of any aquatic animal, and to transform the dynamic object image 1 and audio into action signals 131 and speech signals 132.

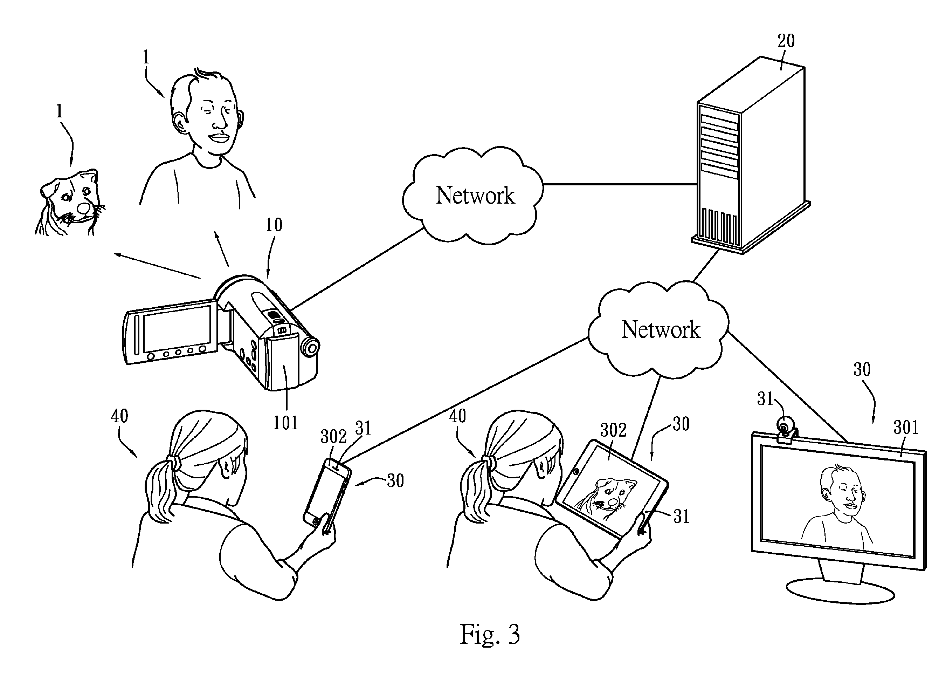

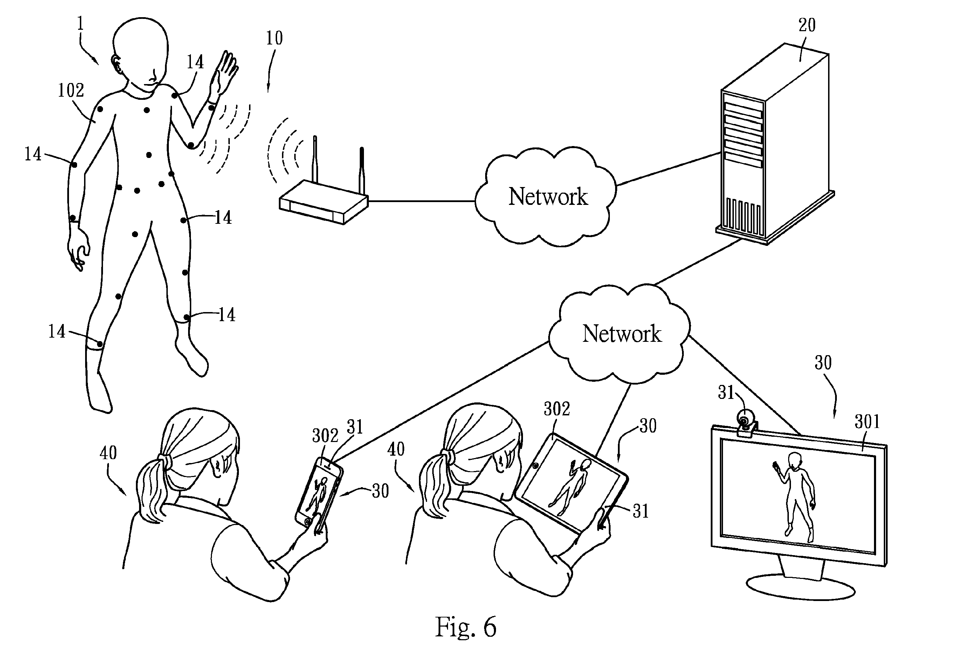

When the input unit 10 transforms the dynamic object image 1 and audio into action signals 131 and speech signals 132, the transformed signals will be transmitted to the intelligent system 20. The intelligent system 20 can be disposed at a household, room or a public place (as shown in FIG. 1 or 5), or even at a remote storage center and transmitted through wired or wireless means (as shown in FIG. 3 or 6). The intelligent system 20 includes a computing processing unit, a memory, and a server. The intelligent system 20 also includes a knowledge base 21, a logic engine 22, a perception engine 23, an insight engine 24, a learning engine 25, a comprehension engine 26, and an inference engine 27, and an artificial neural network 28 is provided to interconnect all the above components to achieve self-adaptive capability (as shown FIG. 2 or 6) so that the intelligent system 20 has the machine learning capability to learn the dynamic action signals 131 and the speech signals 132. Furthermore, the intelligent system 20 can perform computation and analysis, based on the dynamic action signals 131 and speech signals 132, to simulate the dynamic object image 1 and audio. The intelligent system 20, in addition to all the logic engines, may also be artificial intelligence system (not shown) with capabilities of judgment, analysis, and combination.

Furthermore, when the intelligent system 20 performs the computation and analysis on the dynamic action signals 131 and the speech signals 132, the intelligent system 20 can learn and simulate the dynamic object image 1 and audio. Then, the simulated dynamic object image 1 and audio are transmitted to the interactive display interface 30. The interactive display interface 30 can be any one of a display, a flexible display, an audiovisual player 301 (as shown in FIG. 1 or 5), a gate surveillance system, a vehicular audiovisual player, and a smart handheld device 302 (as shown in FIG. 3 or 6), or a flat device with a display screen (not shown). Through the above device, the simulated dynamic object image 1 and audio can be displayed in a two-dimensional manner and applied to other electronic devices for a wider application. The interactive display interface 30 can also be a three-dimensional projection device or a holography device (not shown). Through the above devices, the simulated dynamic object image 1 and audio can be displayed in a three-dimensional manner for a more realistic effect.

The connection between the interactive display interface 30 and the intelligent system 20 is achieved through the internet. The internet includes broadband or narrowband, wherein the broadband further includes ADLS, VDSL, optical fiber, wireless broadband network, power line communication network, cable TV network, satellite broadband network, and the narrowband includes: ISDN, general packet radio service, universal mobile telecommunication system, code division multiple access, 3^{rd}-generation and 4^{th}-generation of mobile phone communication technology standards.

Furthermore, the interactive display interface 30 includes a sensor unit 31 for sensing facial expression, motion and dialogue speech of a user 40 (as shown in FIGS. 1 and 5), and transforming into facial expression and motion signals, and dialogue speech signals for transmission to the intelligent system 20 so that the intelligent system 20 can adjust, based on the facial expression and motion signals and dialogue speech signals of the user 40, the simulated object image 1 and audio so as to achieve real time interactive effect to make the user 40 feel realistic.

Finally, the embodiments of the present invention can be applied to remember the deceased (such as grandfather and grandmother). By using the input unit 10 to record the daily activities of the people while they were alive and to transform into action signals 131 and speech signals 132, and then transmitting to the intelligent system 20 for storage, the intelligent system 20 can perform computation analysis, based on the action signals 131 and the speech signals 132, to simulate the object image 1 and audio of the recorded people. After the people passed away, the present invention can use the interactive display interface 30 to display the object image 1 and audio of the deceased through simulation of the knowledge base 21, the logic engine 22, the perception engine 23, the insight engine 24, the learning engine 25, the comprehension engine 26, and the inference engine 27 for interaction. As such, the next descendants are able to remember the deceased better and go through the grieving process slowly.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A situational simulation system, comprising:
an input unit, for receiving dynamic images and audio, and transforming the dynamic images and audio into dynamic action signals and speech signals;
an intelligent system, connected to the input unit and having a machine learning capability to learn the dynamic action signals and speech signals, the intelligent system also able to perform computation analysis, based on the dynamic action signals and speech signals, to simulate the dynamic images and audio; and
an interactive display interface, connected to the intelligent system and able to display the simulated dynamic images and audio from the intelligent system to interact with a user, the interactive display interface having a sensor unit for sensing the user's facial expression, motion and dialogue speech, and transforming the user's facial expression,
motion and dialogue speech into facial expression and motion signals and dialogue speech signals for transmission to the intelligent system for the intelligent system to adjust the simulated dynamic images and audio based on the user's facial expression and motion signals and the dialogue speech signals.

2. The situational simulation system as claimed in claim 1, wherein the input unit further comprises an image capturing unit, a language capturing unit, and a signal transformation unit; the image capturing unit being connected to the signal transformation unit, and the image capturing unit being able to extract dynamic images from a background and the signal transformation unit transforming the captured dynamic images into action signals; the language capturing unit being connected to the signal transformation unit, and the language capturing unit being able to extract dynamic audio from images and the signal transformation unit transforming the captured dynamic audio into speech signals.

3. The situational simulation system as claimed in claim 1 or 2, wherein the input unit is one of a surveillance device, a camera device, and a device with a camera.

4. The situational simulation system as claimed in claim 1, wherein the input unit is a motion sensing clothing, disposed with a plurality of a sensors and a signal transformer; the sensors are connected to the signal transformer to transform the signals sensed by the sensors.

5. The situational simulation system as claimed in claim 5, wherein the sensors are each one of a body motion sensor, a voice sensor, a brainwave sensor, a pager sensor, a heartbeat sensor, and a blood pressure sensor.

6. The situational simulation system as claimed in claim 1 or 2, wherein the dynamic images and audio are signs relating to one of the following: person of any age with life signs, animal with life signs or aquatic animal with life signs.

7. The situational simulation system as claimed in claim 1, wherein the intelligent system comprises a knowledge base, a logic engine, a perception engine, an insight engine, a learning engine, a comprehension engine and an inference engine, and an artificial neural network to interconnect all the above components.

8. The situational simulation system as claimed in claim 1, wherein the intelligent system is an artificial intelligent system.

9. The situational simulation system as claimed in claim 1, wherein the interactive display interface is a three-dimensional projection device or a holography device to display the dynamic images and audio simulated by the intelligent system.

10. The situational simulation system as claimed in claim 1, wherein the interactive display interface is further disposed with a display screen to display the dynamic images and audio simulated by the intelligent system.

11. The situational simulation system as claimed in claim 1 or 10, wherein the interactive display interface is one of a display, a flexible display, an audiovisual player, a gate surveillance control system, a vehicular audiovisual player, and a smart handheld device.

12. The situational simulation system as claimed in claim 1, wherein the interactive display interface is connected to the intelligent system through the internet; and the internet comprises broadband and narrowband, wherein the broadband further comprises any of the following: ADLS, VDSL, optical fiber, wireless broadband network, power line communication network, cable TV network, satellite broadband network, and the narrowband comprises any of the following: ISDN, general packet radio service, universal mobile telecommunication system, code division multiple access, 3^{rd}-generation and 4^{th}-generation of mobile phone communication technology standards.
